# EUROPÄISCHE PATENTANMELDUNG

(11) **EP 1 077 232 A2**
(43) Veröffentlichungstag der Anmeldung: **21.02.2001**
(21) Anmeldenummer: 00116204.9
(22) Anmeldetag: 03.08.2000
(51) Int. Cl.: C08L 67/02, C08L 77/00, C08K 7/14

(54) **Polyalkylenterephthalat/Polyamid-Blend**

(30) Priorität: 16.08.1999 DE 19938166
(71) Anmelder: BAYER AG, 51368 Leverkusen (DE)
(72) Erfinder: Müller, Matthias, Dr., 47229 Duisburg (DE); Joachimi, Detlef, Dr., 47800 Krefeld (DE); Fuenger, Friedrich, 51373 Leverkusen (DE)

(57) **Zusammenfassung**

Die vorliegende Erfindung betrifft Polyamid/Polyalkylenterephthalat-Blends, die verbesserte elektrische Eigenschaften aufweisen.

## Beschreibung

Die vorliegende Erfindung betrifft Polyamid/Polyalkylenterephthalat-Blends, die verbesserte elektrische Eigenschaften aufweisen.

In JP-A 03 095 263 sind Zusammensetzungen beschrieben, die neben PA thermoplastische Polyester, modifizierte Polyolefine, hydrierte und modifizierte Dienpolymere enthalten. EP-A 079 177 beschreibt ein elektrisch isoliertes Gemisch aus Polyamid, Polymerblend und Flammschutzmittel, das eine verbesserte Lichtbogenbeständigkeit aufweist. EP-A 285 693 beschreibt Gemische aus Polyamid (PA) und thermoplastischem Polyester.

Formkörper aus Blends, die einen Einsatz in elektrischen Anwendungen finden, sollten eine hohe Kriechstrom- und eine hohe Durchschlagfestigkeit auch bei erhöhten Temperaturen aufweisen.

In Literatur JP-A 04 072 352 werden Formmassen aus nicht-kristallinem "aromatischen" PA und Polyalkylenterephthalaten beschrieben und die Verwendung dieser Formmassen in elektrischen Apparaturen. Aromatische nicht-kristalline Polyamide sind im Vergleich zu aliphatischen, teilkristallinen Polyamiden wie PA6 und PA66 teurer in der Herstellung, weniger beständig gegen Umwelteinflüsse und fuhren zu längeren Zykluszeiten bei der Verarbeitung.

Aufgabe war es Blends bzw. thermoplastische Formmassen zu finden, die die obengenannten Nachteile nicht aufweisen und eine hohe Kriechstromfestigkeit mit einer hohen Durchschlagfestigkeit auch bei erhöhter Temperatur kombinieren.

Es ist bekannt, daß thermoplastische, teilaromatische Polyester, wie z.B. Polybutylenterephthalat (PBT) oder Polyethylenterephthalat (PET) und Polyamide (PA) in der Schmelze ineinander unlöslich sind und daher keine Mischbarkeit zeigen. Aufgrund dieser Unverträglichkeit, sind bis heute keine Blends aus Polyalkylenterephthalat (einschließlich PBT) und PA (einschließlich PA6, PA66) von kommerzieller Bedeutung bekannt (Z. Xiaochuan et al, Polymers and Polymer Composites, Vol. 5, No. 7, 1997, S 501 - 505). Wohl aus diesem Grunde finden auch PBT / PA-Blends und PET/PA-Blends keine Erwähnung im Kunststoff Handbuch Polyamide (Kunststoff Handbuch Polyamide 3 / 4, Carl Hanser Verlag, 1998, ISBN 3-446-16486-3, S 131 bis 165).

Überraschenderweise wurde nun gefunden, daß thermoplastische Formmassen enthaltend Polyalkylenterephthalat (PBT, PET) und Polyamid (PA6, PA66) sowohl eine höhere Kriechstromfestigkeit als die einzelnen Blendpartner aufweisen, als auch gute Durchschlagfestigkeit bei erhöhten Temperaturen zeigen.

Gegenstand der Erfindung sind verstärkte, thermoplastische Formmassen enthaltend Polyalkylenterephthalat und PA-6 bzw. PA-66, die Verwendung dieser Formmassen zur Herstellung und Verwendung von Formteilen für den Elektro-/Elektronikbereich, wie z.B. Schaltungen, Kondensatorenbecher, Spulenkörper, Gehäuse.

Der erfindungsgemäße teilaromatische Polyester ist ausgewählt aus der Gruppe Derivate der Polyalkylidenterephthalate, bevorzugt ausgewählt aus der Gruppe der Polyethylentherphthalate, der Polytrimethylenterephthalate und der Polybutylenterephthalate, besonders bevorzugt der Polybutylenterephthalate und Polyethylenterephthalate, ganz besonders bevorzugt des Polybutylenterephthalats.

Unter teilaromatischem Polyester versteht man Materialien, die neben aromatischen Molekülteilen auch aliphatische Molekülteile enthalten.

Polyalkylenterephthalate im Sinne der Erfindung sind Reaktionsprodukte aus aromatischen Dicarbonsäure oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 FF, Karl-Hanser-Verlag, München 1973).

Bevorzugte Polyalkylenterephthalate enthalten mindestens 80, vorzugsweise 90 Mol.-%, bezogen auf die Dicarbonsäure, Terephthalsäurereste und mindestens 80, vorzugsweise mindestens 90 Mol.-%, bezogen auf die Diolkomponente, Ethylenglykol- und/oder Propandiol-1,3- und/oder Butandiol- 1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethandiol-1,2- bzw. Propandiol-1,3- bzw. Butandiol-1,4-Resten bis zu 20 Mol.-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethylcyclobutan, 2,2-bis-(3-β-hydroxyethoxyphenyl)-propan und 2,2-bis-(4-hydroxypropoxyphenyl)-propan (DE-A 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäure, wie sie z.B. in der DE-A 19 00 270 und der US-A 3 692 744 beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol.-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Propandiol-1,3 und/oder Butandiol-1,4 hergestellt worden sind (Polyethylen- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die Polyalkylenterephthalate besitzen im allgemeinen eine intrinsische Viskosität von ca. 0,4 bis 1,7, vorzugsweise 0,5 bis 1,3, jeweils gemessen in Phenol/o-Dichlorbenzol (1:1 Gew.-Teile) bei 25°C.

Das erfindungsgemäße Polyamid ist bevorzugt ausgewählt aus der Gruppe der Derivate der Polyamide in denen pro Polyamidgruppe in der Polymerkette 3 bis 8 Methylengruppen enthalten sind, besonders bevorzugt ausgewählt aus der Gruppe gebildet aus PA6 und PA66.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden laufen ausnahmslos über die Polykondensation in der Schmelze. In diesem Rahmen wird auch die hydrolytische Polymerisation von Lactamen als Polykondensation verstanden.

Bevorzugte Polyamide für die erfindungsgemäßen Formmassen sind teilkristalline Polyamide, die ausgehend von Diaminen und Dicarbonsäuren und/oder Lactamen mit wenigstens 5 Ringgliedern oder entsprechenden Aminosäuren hergestellt werden können.

Als Ausgangsprodukte kommen vorzugsweise aliphatische Dicarbonsäuren wie Adipinsäure, 2,2,4- und 2,4,4-Trimethyladipinsäure, Azelainsäure, Sebazinsäure, aliphatische Diamine wie Hexamethylendiamin, 2,2,4- und 2,4,4-Trimethylhexamethylendiamin, die isomeren Diamino-dicyclohexylmethane, Diamino-dicyclohexylpropane, Bis-aminomethyl-cyclohexan, Aminocarbonsäuren wie Aminocapronsäure, bzw. die entsprechenden Lactame in Betracht. Copolyamide aus mehreren der genannten Monomeren sind eingeschlossen.

Besonders bevorzugt werden Caprolactame, ganz besonders bevorzugt ε-Caprolactam eingesetzt.

Besonders bevorzugt verwendet werden Polyamid 6 und/oder Polyamid 6,6. Ganz besonders bevorzugt ist Polyamid 6.

Die erfindungsgemäß hergestellten Polyamide können auch im Gemisch mit anderen Polyamiden und/oder weiteren Polymeren eingesetzt werden.

Die erfindungsgemäßen Polyalkylenterephthalat/Polyamid-Blends enthalten bevorzugt Füll- und Verstärkungsstoffe wie z.B. Glasfasern oder mineralische Füllstoffe. Die erfindungsgemäßen Formmassen können außerdem weitere Zusatzstoffe wie z.B. Flammschutzmittel, Verarbeitungshilfsmittel, Stabilisatoren, Fließhilfsmittel, Antistatika, Farbstoffe, Pigmente und andere übliche Additive enthalten.

Als faser- oder teilchenförmige Füllstoffe und Verstärkungsstoffe für die erfindungsgemäßen Formmassen können Glasfasern, Glaskugeln, Glasgewebe, Glasmatten, Aramidfasern, Kaliumtitanat-Fasern, Naturfasern, amorphe Kieselsäure, Magnesiumcarbonat, Bariumsulfat, Feldspat, Glimmer, Silikate, Quarz, Talkum, Kaolin, Titandioxid, Wollastonit, u.a. zugesetzt werden, die auch oberflächenbehandelt sein können. Bevorzugte Verstärkungsstoffe sind handelsübliche Glasfasern. Die Glasfasern, die im allgemeinen einen Faserdurchmesser zwischen 8 und 18 µm haben, können als Endlosfasern oder als geschnittene oder gemahlene Glasfasern zugesetzt werden, wobei die Fasern mit einem geeigneten Schlichtesystem und einem Haftvermittler bzw. Haftvermittlersystem z.B. auf Silanbasis ausgerüstet sein können.

Vorzugsweise enthält die erfindungsgemäße Formmasse 10 bis 90 Gew.-Teile, bevorzugt 15 bis 60 Gew.-Teile Polyalkylenterephthalat (bevorzugt Polybutylenterephthalat und/oder Polyethylenterephthalat, besonders bevorzugt Polybutylenterephthalat) wobei die Summe aller Gewichtsanteile der Komponenten Polyalkylenterephthalat, Polyamid und Füll- und/oder Verstärkungsstoff 100 ergibt.

Vorzugsweise enthält die erfindungsgemäße thermoplastische Formmasse 10 bis 90 Gew.-Teile, bevorzugt 15 bis 60 Gew.-Teile Polyamid (bevorzugt PA6 und/oder PA66, besonders bevorzugt PA6) wobei die Summe aller Gewichtsanteile der Komponenten Polyalkylenterephthalat, Polyamid und Füll- und/oder Verstärkungsstoffe 100 ergibt.

Vorzugsweise enthält die erfindungsgemäße thermoplastische Formmasse 10 bis 50 Gew.-Teile, bevorzugt 20 - 40, insbesondere 25 - 35 Gew.-Teile Füll- und/oder Verstärkungsstoffe (bevorzugt Glasfasern), wobei die Summe aller Gewichtsanteile der Komponenten Polyalkylenterephthalat, Polyamid und Füll- und/oder Verstärkungsstoffe 100 ergibt.

Das erfindungsgemäße Polyalkylenterephthalat/PA-Blend kann übliche Additive, wie Mittel gegen Wärmezersetzung, Mittel gegen Wärmevernetzung, Mittel gegen Beschädigung durch ultraviolettes Licht, Weichmacher, Gleit- und Entformungsmittel, Nukleierungsmittel, Stabilisatoren sowie Farbstoffe und Pigmente enthalten.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Anthrachinone als Farbmittel sowie andere Farbmittel zugesetzt werden.

Als Keimbildungsmittel können z.B. Natriumphenylphosphinat, Aluminiumoxid, Siliziumdioxid sowie bevorzugt Talkum eingesetzt werden.

Gleit- und Entformungsmittel, welche üblicherweise in Mengen bis zu 1 Gew.-% eingesetzt werden, sind bevorzugt Esterwachse, Penterithrytstearat (PETS), langkettige Fettsäuren (z.B. Stearinsäure oder Behensäure), deren Salze (z.B. Ca- oder Zn-Stearat) sowie Amidderivate (z.B. Ethylen-bis-stearylamid) sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid genannt.

Die erfindungsgemäßen teilaromatischen Polyester/Polyamid-Blends werden hergestellt, indem man die jeweiligen Bestandteile in bekannter Weise vermischt und bei Temperaturen von 220°C bis 330°C in übliche Aggregaten wie z.B. Innenknetern, Extrudern, Doppelwellenextruder schmelzcompoundiert oder schmelzextrudiert. Bei dem Schmelzcompoundier- oder Schmelzextrudierschritt lassen sich weitere Zusätze wie z.B. Verstärkungsstoffe, kautschukelastische Polymerisate, Stabilistoren, Farbstoffe, Pigmente, Gleit- und Entformungsmittel, Nukleierungsmittel, Compatibilizer und andere Additive zusetzen.

Die erfindungsgemäßen Blends bzw. thermoplastischen Formmassen können zur Herstellung von Formkörpern und Halbzeugen verwendet werden. Bei den Formkörpern kann es sich um elektrische Teile für den Elektro-/Elektronikbereich wie z.B. Schaltergehäuse, Kondensatorenbecher, Isolierkörper, Gehäuse, Spulenkörper, Steckerleisten handeln. Die erfindungsgemäßen Formkörper sind ebenfalls Gegenstand des Patents.

### Beispiele

Die folgenden Materialien werden in den Beispielen verwendet:
Pocan B3235: PBT-Spritzgießtyp mit 30% Glasfasern, ungefärbt (Formmassesatz nach ISO 7792: PBT, MHMR, 10 - 100, GF30)
Durethan BKV30: PA6-Sprizgießtyp mit 30% Glasfasern, ungefärbt (Formmassensatz nach ISO1874: PA6, MR, 14 - 100, GF30)
Durethan AKV30: PA66-Spritzgießtyp mit 30% Glasfasern, ungefärbt (Formmassensatz nach ISO1874: PA66, MR, 14 - 090, GF30)

Die genannten Materialien sind Handelsprodukte der Bayer AG, Leverkusen.

Compoundierungen erfolgten auf einem Zweiwellenextruder des Typs ZSK32 (Werner und Pfleiderer) bei Massetemperaturen im Bereich von 260 - 300°C.

Die Prüfkörper wurden auf einer Spritzgießmachine des Typs Arburg 320-210-500 bei Massetemperaturen von 260 - 290°C und Werkzeugtemperaturen von 70 - 90°C verspritzt.

Zusammensetzung und Eigenschaften der erfindungsgemäßen Blends gehen aus den Tabelle 1 und 2 hervor.

Wie aus den Tabellen 1 und 2 ersichtlich führen die erfindungsgemäßen Formmassen zu Formteilen, die deutlich höhere Kriechstromfestigkeiten aufweisen als glasfaserverstärktes PA6, PBT und PA66 (Vergleich 1 - 3). Die erfindungsgemäßen Formmassen zeigen eine erhöhte Durchschlagfestigkeit bei erhöhter Temperatur im Vergleich zu glasfaserverstärktem PA6 (Vergleich 1).

**Tabelle 1**

| | | | Vergleich 1 | Vergleich 2 | Beispiel 1 * | Beispiel 2 * | Beispiel 3 * | Beispiel 4 ** | Beispiel 5 *** |
|---|---|---|---|---|---|---|---|---|---|
| Durethan BKV 30 | | [Gew.-%] | 100 | - | 30 | 50 | 70 | 70 | 70 |
| Pocan B3235 | | [Gew.-%] | - | 100 | 70 | 50 | 30 | 30 | 30 |
| Vergleichszahl der Kriechwegbildung CTI Prüflösung A IEC112 | | [Volt] | 475 | 325 | 600 | 600 | 600 | 600 | 600 |

| Durchschlagfestigkeit | | | | | | | | | |
|---|---|---|---|---|---|---|---|---|---|
| IEC60243-1 | 23°C | [KV/mm] | 43 | 35 | 39 | 43 | 44 | 40 | 39 |
| | 130°C | [KV/mm] | 4 | 35 | 30 | 20 | 11 | 10 | 10 |

| | | | | | | | | | |
|---|---|---|---|---|---|---|---|---|---|
| * Granulate der genannten Handelsprodukte wurden bei 23°C physikalisch vermischt und diese Mischungen wurden unter üblichen Spritzgießbedingungen zu Prüfkörpern verspritzt | | | | | | | | | |
| ** Granulate der genannten Handelsprodukte wurden bei 23°C physikalisch vermischt, diese Mischungen anschließend compoundiert und das dabei erhaltene Granulat unter üblichen Spritzgießbedingungen zu Prüfkörpern verspritzt | | | | | | | | | |
| *** Die erfindungsgemäßen Formmassen wurden durch gemeinsame Compoundierung der den Handelsprodukten zugrundeliegenden Rohstoffe in einem Compoundiervorgang hergestellt und das dabei erhaltene Granulat unter üblichen Spritzgießbedingungen zu Prüfkörpern verspritzt | | | | | | | | | |

**Tabelle 2**

| | | | Vergleich 3 | Vergleich 2 | Beispiel 6 ** | Beispiel 7 *** |
|---|---|---|---|---|---|---|
| Durethan AKV 30 | | [Gew.-%] | 100 | - | 70 | 70 |
| Pocan B3235 | | [Gew.-%] | - | 100 | 30 | 30 |
| Vergleichszahl der Kriechwegbildung CTI Prüflösung A IEC112 | | [Volt] | 500 | 325 | 600 | 600 |

| Durchschlagfestigkeit | | | | | | |
|---|---|---|---|---|---|---|
| IEC234-1 | 23°C | [KV/mm] | 44 | 35 | 42 | 42 |
| | 130°C | [KV/mm] | 13 | 35 | 14 | 13 |

| | | | | | | |
|---|---|---|---|---|---|---|
| ** Granulate der genannten Handelsprodukte wurden bei 23°C physikalisch vermischt, diese Mischungen anschließend compoundiert und das dabei erhaltene Granulat unter üblichen Spritzgießbedingungen zu Prüfkörpern verspritzt | | | | | | |
| *** Die erfindungsgemäßen Formmassen wurden durch gemeinsame Compoundierung der den Handelsprodukten zugrundeliegenden Rohstoffe in einem Compoundiervorgang hergestellt und das dabei erhaltene Granulat unter üblichen Spritzgießbedingungen zu Prüfkörpern verspritzt | | | | | | |

## Patentansprüche

1. Thermoplastische Formmassen enthaltend
A) Polyalkylenterephthalat
B) Polyamid 6 und/oder Polyamid 6,6
C) Füll- und/oder Verstärkungsstoffe.

2. Thermoplastische Formmassen gemäß Anspruch 1, enthaltend 10 bis 90 Gew.-Teile A und 10 bis 90 Gew.-Teile B und 20 bis 40 Gew.-Teile C, wobei die Summe aller Gewichtsteile der Komponenten A, B und C 100 ergibt.

3. Thermoplastische Formmassen gemäß Anspruch 1, enthaltend 15 bis 60 Gew.-Teile A und 15 bis 60 Gew.-Teile B und 20 bis 40 Gew.-Teile C, wobei die Summe aller Gewichtsteile der Komponenten A, B und C 100 ergibt.

4. Thermoplastische Formmassen gemäß einem oder mehrerer der Ansprüche, wobei es sich bei Komponente A um Polybutylenterephthalat und/oder Polyethylenterephthalat handelt.

5. Thermoplastische Formmassen gemäß einem oder mehrerer der vorangegangenen Ansprüche, wobei es sich bei den Füll- und/oder Verstärkungsstoffen C um Glasfasern handelt.

6. Verwendung der thermoplastischen Formmassen gemäß einem oder mehreren der vorhergehenden Ansprüche zur Herstellung von Formkörpern und/oder Halbzeugen.

7. Verwendung der thermoplastischen Formmassen gemäß einem oder mehreren der vorliegenden Ansprüche zur Herstellung von Teilen des Elektro-/Elektronikbereiches wie z.B. Gehäuse, Spulenkörper, Kondensatorenbechern, Relais, Steckerleisten, Isolierkörper.

8. Verwendung der thermoplastischen Formmassen gemäß einem oder mehreren der vorliegenden Ansprüche zur Herstellung von Teilen des Elektro-/Elektronikbereiches wie z.B. Gehäuse, Spulenkörper, Kondensatorenbechern, Relais, Steckerleisten, Isolierkörper, die eine Kriechstromfestigkeit CTI größer 500 Volt erfordern.

9. Verwendung der thermoplastischen Formmassen gemäß einem oder mehreren der vorliegenden Ansprüche zur Herstellung von Teilen des Elektro-/Elektronikbereiches wie z.B. Gehäuse, Spulenkörper, Kondensatorenbrechern Relais, Steckerleisten, Isolierkörper, die eine Kriechstromfestigkeit CTI größer 500 Volt und/oder eine elektrische Durchschlagfestigkeit größer 10 kV/mm oberhalb 80°C erfordern.

10. Formkörper bzw. Halbzeuge, erhältlich aus thermoplastischen Formmassen gemäß einem oder mehreren der vorhergehenden Ansprüche.

11. Teile für den Elektro-/Elektronikbereich, Kondensatorenbecher, Isolierkörper, Gehäuse, Spulenkörper, Steckerleisten gemäß Anspruch 10.
